# EUROPEAN PATENT SPECIFICATION

(11) **EP 3 271 602 B1**
(45) Date of publication and mention of the grant of the patent: **27.01.2021**
(21) Application number: 16711803.3
(22) Date of filing: 16.03.2016
(51) Int. Cl.: F16D 55/22, F16D 65/18, F16D 65/28

(54) **BRAKE ACTUATOR**
BREMSZYLINDER
ACTIONNEUR DE FREIN

(30) Priority: 16.03.2015 SE 1550310
(43) Date of publication of application: 24.01.2018
(73) Proprietor: Faiveley Transport Nordic AB, 261 24 Landskrona (SE)
(72) Inventor: SEVERINSSON, Lars, 310 21 Hishult (SE)
(74) Representative: Ström & Gulliksson AB
(86) International application number: PCT/EP2016/055695
(87) International publication number: WO 2016/146687

(56) References cited:
- WO-A1-01/21977
- WO-A1-01/40673
- WO-A1-03/082651
- DE-A1-102006 050 804
- DE-B1- 2 710 585
- DE-U1- 29 923 681
- JP-A- 2014 228 111

## Description

### Technical Field

The present invention relates to a railway vehicle brake actuator for brakingly engaging a brake block or pad with a rotating part of a railway vehicle. The invention also concerns a railway vehicle comprising such a brake actuator.

### Background

Powerful spring means are frequently used in the braking art for creating a parking brake force. The spring means can for example be held compressed by pneumatic or hydraulic pressure. When this pressure is lowered, the spring means are arranged to apply the brakes for parking or at an emergency situation. Such arrangements are often referred to as spring brakes. A spring brake may be combined with a pneumatic or hydraulic service brake actuator.

It is also known in the braking art to utilize powerful spring means for service braking. Also in this case the spring means can be held compressed by for example pneumatic or hydraulic pressure. When this pressure is lowered, the spring means are arranged to apply the brakes for lowering the speed of the vehicle, i e for service braking. A service brake of this kind may be called an inverse brake.

A problem with such a brake is that the control, normally by pneumatic or hydraulic pressure, of the service brake force generated by the spring can be complicated and not performed with the necessary speed and accuracy.

It can also be borne in mind that there is a tendency in the art to employ electricity to an increasing extent for controlling and powering different functions onboard vehicles.

WO2004031607A1 relates to a brake tensioning device, especially for a rail vehicle brake, said device comprising a brake actuator for tensioning and/or releasing the brake, and a force converter for converting the energy outputted by the brake actuator into a brake tensioning movement. The force converter comprises a shearing force measuring bolt which is arranged in the power train and is provided with at least one measuring sensor for directly or indirectly measuring the braking force. The bolt forms an articulated axle of an articulation which penetrates passage openings of at least two force transmission elements of the force converter which can be pivoted in relation to each other. A bushing provided with radially inner edge recesses is radially arranged between at least one opening of a force transmission element and the shearing force measuring bolt. Moreover, a spring means is arranged to apply the brake in case of a failure of braking signals. This spring has, however, no function in ordinary braking situations, which are entirely controlled by the above brake actuator.

In US4334711A, a "snow brake" control system for a railway vehicle is described. In the control system, an electronic timing circuit is operative in response to the operator's brake valve device being moved to its brake release position to provide an output signal that acts through a relay switch to deenergize a magnet valve that normally interrupts communication of "snow brake" control pressure to the system relay valve in order to withhold "snow brake" operation for a predetermined period of time sufficient to allow the vehicle brake units to release the brakes and thereby effect operation of the brake unit slack adjuster mechanism. When the time period expires, the timing circuit output signal disappears and the magnet valve becomes energized to reestablish "snow brake" control pressure during the remainder of the brake release period to maintain a light brake application in effect. The focus of this brake control system is a "snow brake feature", preventing ice formation on the brake pads. US4334711A is, however, silent on the design of the brake actuator per se, and hence fails to provide information to an artisan desiring to design a brake actuator.

CN103213597A discloses a brake arrangement in which a spring is arranged to provide a braking force in the event of a failure of a brake actuator. This document is also silent on the design of the brake actuator per se.

DE19617796A describes a brake actuator in which the brake force is created by a trapezoidal thread engagement between two cooperating units, the distance between which may be altered by rotating the trapezoidal thread engagement.

DE19851668A discloses a brake actuator which uses a non linear wedge/spring combination to achieve a controllable braking force application. The movements of the wedge are controlled by an electric motor.

US4175645A relates to a brake actuator for a vehicle, particularly a rail vehicle, which is automatically applied during a power loss and which is electrically resettable. The brake has an eccentric member which cooperates with a controllable resilient member for actuating the brake force.

WO2014189089A1 (corresponding to JP2014228111A1) describes a brake actuator comprising a combined spring/eccenter mechanism for controlling the delivered brake force by the actuator.

Further background art is disclosed in DE29923681U1 and WO2003082651A1.

### Summary

An object of the present invention is to mitigate or eliminate the drawbacks discussed above. Hence, the teachings herein are concerned with an inverse service brake for a rail vehicle, in which the compression of the spring means is not directly controlled by pneumatic or hydraulic pressure (which may not even be available onboard the vehicle) and in which the above and other problems are solved or at least reduced.

The objects above - as well as other object that will appear from the following description - have now been achieved by the concept set forth in the appended independent claims; preferred embodiments being defined in the related dependent claims.

In an aspect, there is provided a railway vehicle brake actuator which comprises an eccentric mechanism in a brake force transmitting chain from the spring means to the brake block or pad; and a motor for controlling the angular position of an eccentric in the eccentric mechanism and thus the brake force transmitted from the spring means.

In a further aspect, there is provided a railway vehicle brake actuator for brakingly engaging a brake block or pad with a rotating part of a vehicle. The brake actuator comprises spring means creating a linear brake force, and an eccentric mechanism interconnecting the spring means and the brake block or pad. Furthermore, the brake actuator has a motor for controlling the angular position of an eccentric which controls movements of the eccentric mechanism in the direction of the force generated by the spring means, and thus the brake force transmitted from the spring means to the brake block or pad.

The motor is normally an electric rotary motor, but could also be an electric linear motor or even another motor powered by any medium.

The purpose of the motor is to control the position of the eccentric mechanism, which means that only limited power is needed and that the speed and accuracy are enhanced.

The principles of the concept set forth herein can be used for disc braking or block braking, but in a practical case the railway vehicle brake actuator is employed in a disc brake for a rail vehicle. Here, the arrangement comprises spring means for biasing a drive bridge in a brake application direction, the drive bridge being connected to the brake pad for braking engagement with a brake disc of the vehicle and being controlled in its position in this direction by an eccentric, preferably a cam, which extends through an opening in the drive bridge and is arranged on a control shaft journalled in relation to a housing of the brake actuator and connected to the motor, preferably an electric rotary motor.

In this case, the spring means may be compression springs supported by a cover of the housing of the brake actuator, and the control shaft may be journalled in shaft supports of the cover.

The function of the motor is primarily to control the position of the eccentric or cam, which means that only a limited rotation thereof is needed. To this end reduction gearing is preferably provided between the electric motor and an outgoing drive pinion thereof. The reduction gearing may comprise a planetary reduction gearing.

The drive pinion may be in gear engagement with a gear wheel on the control shaft. For further reduction this gear wheel preferably has a much larger diameter than the drive pinion.

In a practical embodiment, the drive bridge may be in connection with a brake head, which in turn may be connected to the brake pad. The brake pad may be attached to a brake pad holder, which is connected to the brake head by a brake lever pivotally attached to the housing.

A load cell may be arranged between the drive bridge and the brake head. The purpose of such a load cell is preferably to sense the transmitted brake force and to control the operation of the electric motor for obtaining the desired brake characteristics.

The railway vehicle brake actuator may be provided with a built-in slack adjuster device so as to form a so-called brake unit. The purpose of the slack adjuster device is - as is very well known in the art - to compensate for the wear of the brake pad (or brake block)and of the brake disc (or wheel). In the practical embodiment such a slack adjuster device is arranged between the drive bridge and the brake head.

In a practical embodiment, the slack adjuster device comprises a nut rod provided with an external threaded nut portion connected to the brake head. The nut portion is in internal thread engagement with a rotatable adjuster tube connected to the drive bridge. The adjuster tube is arranged to be driven by the electric motor via an electromagnetic clutch, a bevel gear wheel and an adjuster tube gear wheel in splines connection with the adjuster tube.

In a further aspect, there is provided a railway vehicle which comprises a brake actuator configured to brakingly engage a brake block or pad with a rotating part of the vehicle.

### Brief Description of the Drawings

The teachings herein will be described in further detail below with reference to the accompanying drawings, in which
Fig. 1 is an isometric view of an electromechanical disc brake unit,
Fig. 2 is a view from above of the same unit with certain portions shown in section, and
Fig. 3 is a schematical illustration of a block brake unit embodying the same principles as the disc brake unit of Figs 1 and 2.

### Detailed Description

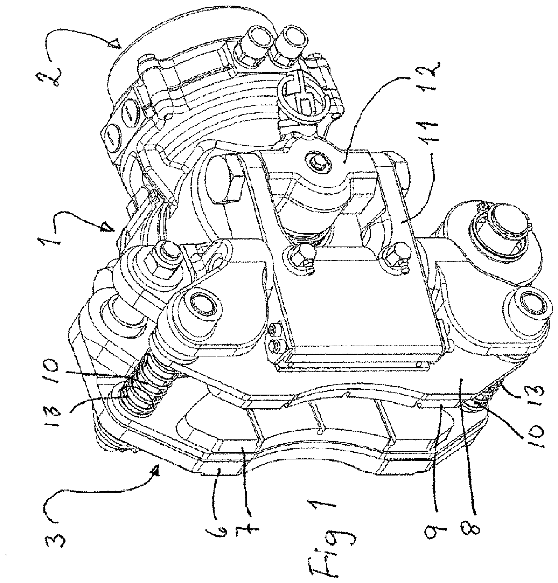

Referring first to Fig 1, an electromechanical disc brake unit generally comprises a main body 1, in which a mechanism for converting a rotary movement into a longitudinal movement is contained and to which an electric rotary motor 2 is attached.

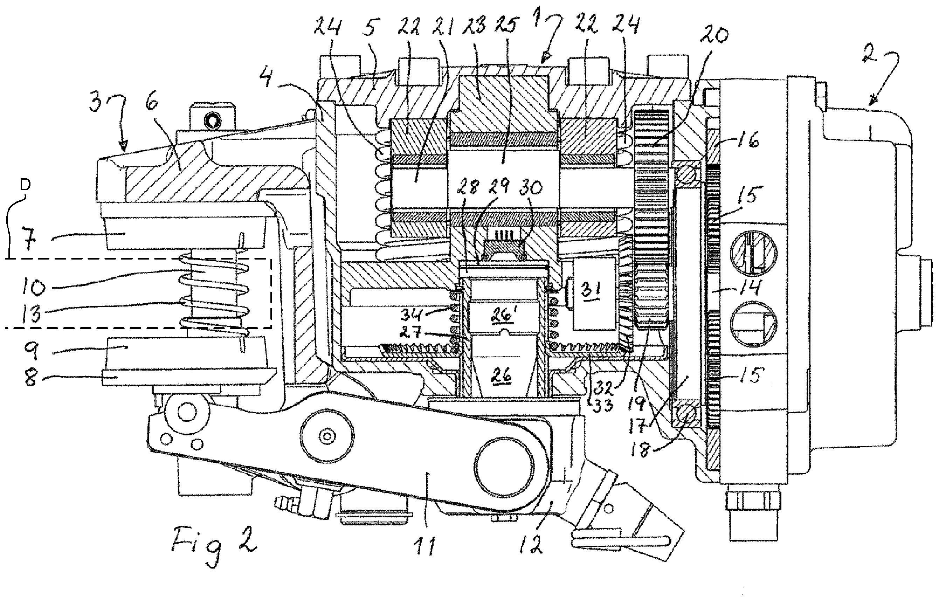

As is known in the art, such a brake unit is intended for mounting in an under frame of a vehicle, normally a rail vehicle (not shown), in the vicinity of a brake disc D (dotted lines in Fig. 2) which is mounted to a rotating part, normally a wheel axle of the vehicle and with which the brake unit is to brakingly cooperate.

A brake disc engaging assembly 3 is connected to the main body 1 in such a manner that minor axial movements of the brake disc D relative to the main body are allowed during service.

The design for the mounting of the brake unit in the vehicle does not form a part of the concept set forth herein and is not further illustrated and described.

Referring then mainly to Fig. 2, the main body 1 has a housing 4 and a cover 5 attached thereto. Also the motor 2 is attached thereto.

A first brake pad holder 6, provided with a replaceable brake pad 7, is part of the brake disc assembly 3. A second brake holder 8, provided with a replaceable brake pad 9, is slidably arranged on guide rods 10 attached to the first brake pad holder 6. A brake lever 11 is pivotally connected at its central part to the brake disc assembly 3. The end to the left in the drawings of the brake lever 11 is pivotally connected to the second brake holder 8, whereas its end to the right in the drawings is pivotally connected to a brake head 12. Return springs 13 are arranged around the guide rods 10 between the two brake holders 6, 8 for biasing them apart.

By this design, a movement downward in Fig. 1 of the brake head 12 will cause the second brake pad holder 8 to move in the direction towards the first brake pad holder 6 for effecting a braking engagement of the brake pads 7 and 9 with the brake disc D rotating between these pads. A return movement will then be effected by the return springs 13.

The electric motor 2 has an outgoing, rotating shaft 14 (Fig. 2) in gear engagement with rotatable planet wheels 15, which at their outer peripheries are in gear engagement with a fixed ring wheel 16. The planet wheels 15 are journalled in a planet holder 17, preferably journalled by a radial ball bearing 18 in the main body 1. The planet holder 17 is provided with an outgoing drive pinion 19, whose rotational speed is considerably reduced by the described planetary gearing in relation to the rotational speed of the motor 2.

The reducing gear between the motor 2 and the outgoing drive pinion 19 may however be of various designs.

A gear wheel 20, preferably with considerably larger diameter than the drive pinion 19, is in gear engagement with the drive pinion 19. A cylindrical control shaft 21 is journalled for rotation in two shaft supports 22 in the cover 5.

A drive bridge 23 is guided by the housing 4 and the cover 5 for longitudinal movements downwards and upwards in Fig 2. Powerful compression springs 24 are arranged between the drive bridge 23 and the cover 5 for exerting - as will appear more clearly below - a brake applying force downwards in Fig. 2.

The central portion of the control shaft 21 is formed as an eccentric or cam 25 cooperating with an opening in the drive bridge 23 with such a shape that a rotation of the control shaft 21 with its eccentric 25 from the shown rest position with the drive bridge 23 in its uppermost position and the springs 24 compressed will enable the drive bridge 23 to move slightly downwards in Fig. 2 under the action of the springs 24. As there is a mechanical connection (to be described) between the drive bridge 23 and the brake head 12, such a movement can result in a movement downwards of the brake head 12 and a pivotal movement of the brake lever 11 in a brake applying direction.

The parts 21, 23, 25 can together be called an eccentric mechanism.

The brake head 12 is provided with a nut rod 26 extending upwards in Fig. 2. This nut rod 26 is provided with an external threaded nut portion 26' in internal thread engagement with a rotatable adjuster tube 27.

In an appropriate compartment in the drive bridge 23 there is above the adjuster tube 27 provided a piston 28, a pressure medium 29, and a pressure transducer 30. During operation of the device, the force from the drive bridge 23 is accordingly transmitted to the brake head 12 via the pressure medium 29, the piston 28, the adjuster tube 27, and the nut rod 26 with its nut portion 26'. The transmitted force is sensed by the pressure transducer 30 and is used to control the operation of the electric motor 2 for obtaining the desired brake characteristic.

The parts 28-30 can together be called a load cell.

The rotatable adjuster tube 27 (in engagement with the nut portion 26' of the nut rod 26) is part of a slack adjuster device now to be described.

Selectively connected to the drive pinion 19 over an electromagnetic clutch 31 is a bevel gear wheel 32, forming a right angle gear with an adjuster tube gear wheel 33. This letter gear wheel 33 has a splines connection to the adjuster tube 27, so that rotation of the gear wheel 33 will impart a rotation to the adjuster tube 27 but that relative axial movement is allowed. There is a compression spring 34 biasing the gear wheel 33 downwards in Fig. 2.

When the rotational movement of the eccentric 25 is indicated to be too long in relation to the desired brake force, which is an indication of worn-off brake pads 7, 9, the electromagnetic clutch 31 will engage, so that rotary motion is transmitted from the drive pinion to the adjuster tube 27 over the right angle gear 32, 33, pushing the nut rod 26 and thus the brake head 12 slightly downwards for compensating for the wear of the brake pads 7, 9 and of the brake disc D.

The parts 26, 26', 27, 31-34 can together be called a slack adjuster device.

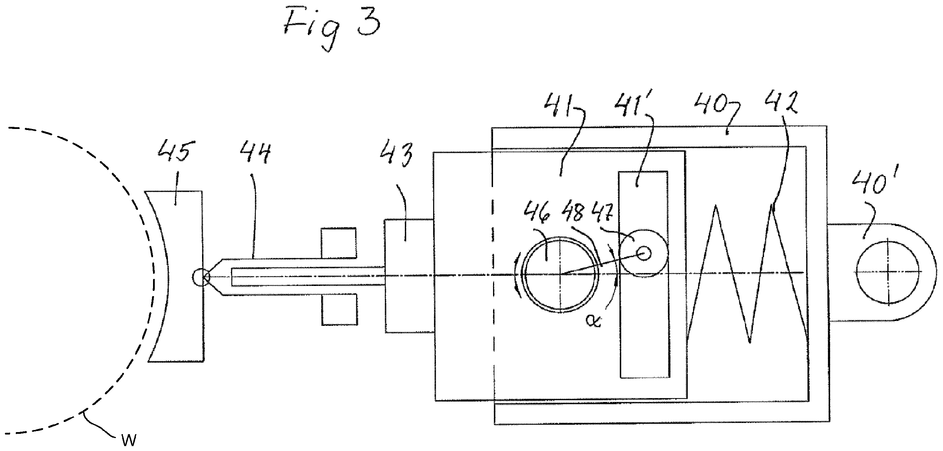

An exemplary block brake unit is schematically shown in Fig. 3. Shown herein is a housing 40 with an ear 40' for the attachment of the brake unit to a rail vehicle to be braked. In the housing 40 an eccentric mechanism 41 is axially movable, acted on by a powerful spring 42. Controlled by the eccentric mechanism 41, as will be described, the force from the spring 42 can be transmitted via a load cell 43 and a slack adjuster device 44 to a brake block 45 to be brakingly applied against a wheel W of the vehicle, on which the brake unit is mounted.

The eccentric mechanism 41 has a shaft 46, which is journalled for rotation in the housing 40 and can be rotated by a motor (not shown). The eccentric mechanism 41 is provided with open sides or axial long-holes for allowing axial movement thereof. The eccentric is here illustrated as a roller 47 contained in a transverse slot 41' in the eccentric mechanism 41. The roller 47 is connected to a lever 48 which is attached to the shaft 46. By rotating the shaft 46 an angle α by means of the motor, the eccentric assembly 41 will be allowed to move forward or to left in the drawing under the action of the spring 42. Also, the roller 47 can itself generate a brake force to the left in the drawing by its engagement with the left side of the slot 41'.

One or more compression springs 24, 42 are used in the two described embodiments, but generally any spring means can be utilized.

The means for controlling the eccentric mechanism is shown and described as an electric rotary motor, but generally any motor can be utilized.

The teachings herein have been exemplified by a disc brake unit and a schematic block brake unit, but generally the concept can theoretically be embodied in any brake actuator (without load cell and/or slack adjuster device).

The electric motor has been described as providing a rotary control movement for the eccentric or cam, but the design is such that the force from the motor can be added as a brake force to the force of the spring means.

A favorable aspect of the described embodiments is that thanks to the design with the eccentric mechanism near its equilibrium (as is illustrated in Fig. 3) the great forces from the spring means may be controlled by a small motor.

## Claims

1. A railway vehicle brake actuator for brakingly engaging a brake block (45) or pad (9) with a rotating part (W; D) of the railway vehicle, said railway vehicle brake actuator comprising spring means (24; 42) creating a linear brake force; wherein the railway vehicle brake actuator comprises an eccentric mechanism (21, 23, 25; 41) in a brake force transmitting chain from the spring means (24; 42) to the brake block (45) or pad (9), and a motor (2) configured to control the angular position of an eccentric (25; 47, 48) in said eccentric mechanism (21, 23, 25; 41) and thus the brake force transmitted from the spring means (24; 42).

2. The railway vehicle brake actuator according to claim 1 for brakingly engaging a brake pad (9) with a brake disc (D) of the railway vehicle, said railway vehicle brake actuator comprising said spring means (24) for biasing a drive bridge (23) in a brake application direction, the drive bridge (23) being connected to the brake pad (9) and being controlled in its position in this direction by said eccentric, preferably a cam (25), which extends through an opening in the drive bridge (23) and is arranged on a control shaft (21) journalled in relation to a housing (4) of the railway vehicle brake actuator and connected to the motor, preferably an electric rotary motor (2).

3. The railway vehicle brake actuator according to claim 2, wherein said spring means, preferably compression springs (24), are supported by a cover (5) of the housing (4) of the railway vehicle brake actuator, and wherein the control shaft (21) is journalled in shaft supports (22) of the cover (5).

4. The railway vehicle brake actuator according to claim 2, wherein a reduction gearing (14-18) is provided between the motor (2) and an outgoing drive pinion (19) thereof.

5. The railway vehicle brake actuator according to claim 4, wherein the reduction gearing comprises a planetary reduction gearing (14-18).

6. The railway vehicle brake actuator according to claim 4 or 5, wherein said outgoing drive pinion (19) is in gear engagement with a gear wheel (20) on the control shaft (21).

7. The railway vehicle brake actuator according to any one of claims 2-6, wherein the drive bridge (23) is in connection with a brake head (12) which in turn is connected to the brake pad (9).

8. The railway vehicle brake actuator according to claim 7, wherein the brake pad (9) is attached to a brake pad holder (8) which is connected to the brake head (12) by a brake lever (11) pivotally attached to a brake disc engaging assembly (3).

9. The railway vehicle brake actuator according to claim 7, wherein a load cell (28-30) is arranged between the drive bridge (23) and the brake head (12), and preferably configured to sense the transmitted braking force to the brake head (12).

10. The railway vehicle brake actuator according to any one of claims 7-9, wherein a slack adjuster device (26, 26', 27, 31-34) is arranged between the drive bridge (23) and the brake head (12).

11. The railway vehicle brake actuator according to claim 10, wherein a nut rod (26) provided with an external threaded nut portion (26') is connected to the brake head (12), the external threaded nut portion (26') being in internal thread engagement with a rotatable adjuster tube (27) connected to the drive bridge (23), and the adjuster tube (27) being arranged to be driven by the motor (2) via an electromagnetic clutch (31), a bevel gear wheel (32) and an adjuster tube gear wheel (33) in splines connection with the adjuster tube.

12. A railway vehicle, comprising a railway vehicle brake actuator as claimed in any one of the preceding claims, said railway vehicle brake actuator being configured for brakingly engaging a brake block (45) or pad (9) with a rotating part (W; D) of the railway vehicle.

## Patentansprüche

1. Schienenfahrzeugbremsaktuator zum bremsenden in Eingriff bringen eines Bremsklotzes (45) oder Bremsbelags (9) mit einem rotierenden Teil (W; D) des Schienenfahrzeugs, wobei der Schienenfahrzeugbremsaktuator eine Federeinrichtung (24; 42) aufweist, die eine lineare Bremskraft erzeugt, wobei der Schienenfahrzeugbremsaktuator einen Exzentermechanismus (21, 23, 25; 41) in einer Bremskraftübertragungskette von der Federeinrichtung (24; 42) zu dem Bremsklotz (45) oder Bremsbelag (9) aufweist und einen Motor (2), der dazu eingerichtet ist, die Winkelstellung eines Exzenters (25; 47, 48) in dem Exzentermechanismus (21, 23, 25; 41) und somit die von der Federeinrichtung (24; 42) übertragene Bremskraft zu steuern.

2. Schienenfahrzeugbremsaktuator nach Anspruch 1 zum bremsenden in Eingriff bringen eines Bremsbelags (9) mit einer Bremsscheibe (D) des Schienenfahrzeugs, wobei der Schienenfahrzeugbremsaktuator die Federeinrichtung (24) zum Vorspannen einer Antriebsbrücke (23) in eine Bremsungsrichtung umfasst, wobei die Antriebsbrücke (23) mit dem Bremsbelag (9) verbunden ist und in ihre Position in dieser Richtung durch den Exzenter, vorzugsweise einen Nocken (25), gesteuert wird, der sich durch eine Öffnung in der Antriebsbrücke (23) erstreckt und auf einer Steuerwelle (21) angeordnet ist, die bezüglich eines Gehäuses (4) des Schienenfahrzeugbremsaktuators drehbar gelagert und mit dem Motor, vorzugsweise einem elektrischen Rotationsmotor (2), verbunden ist.

3. Schienenfahrzeugbremsaktuator nach Anspruch 2, bei dem die Federeinrichtung, vorzugsweise Druckfedern (24), von einem Deckel (5) des Gehäuses (4) des Schienenfahrzeugbremsaktuators abgestützt ist und bei dem die Steuerwelle (21) in Wellenlagern (22) des Deckels (5) drehbar gelagert ist.

4. Schienenfahrzeugbremsaktuator nach Anspruch 2, bei dem ein Untersetzungsgetriebe (14-18) zwischen dem Motor (2) und einem abgehenden Antriebsritzel (19) desselben vorhanden ist.

5. Schienenfahrzeugbremsaktuator nach Anspruch 4, bei dem das Untersetzungsgetriebe ein Planetenuntersetzungsgetriebe (14-18) umfasst.

6. Schienenfahrzeugbremsaktuator nach Anspruch 4 oder 5, bei dem das abgehende Antriebsritzel (19) sich im Zahneingriff mit einem Zahnrad (20) auf der Steuerwelle (21) befindet.

7. Schienenfahrzeugbremsaktuator nach einem der Ansprüche 2 bis 6, bei dem die Antriebsbrücke (23) in Verbindung mit einem Bremskopf (12) steht, der wiederum mit dem Bremsbelag (9) verbunden ist.

8. Schienenfahrzeugbremsaktuator nach Anspruch 2, bei dem der Bremsbelag (9) an einem Bremsbelaghalter (8) befestigt ist, der mit dem Bremskopf (12) durch einen Bremshebel (11) verbunden ist, welcher schwenkbar an einer Bremsscheibeneingriffsanordnung (3) angebracht ist.

9. Schienenfahrzeugbremsaktuator nach Anspruch 7, bei dem ein Kraftaufnehmer (28-30) zwischen der Antriebsbrücke (23) und dem Bremskopf (12) angeordnet und vorzugsweise dazu eingerichtet ist, die auf den Bremskopf (12) übertragene Bremskraft zu erfassen.

10. Schienenfahrzeugbremsaktuator nach einem der Ansprüche 7 bis 9, bei dem eine Spieleinstellvorrichtung (26, 26', 27, 31-34) zwischen der Antriebsbrücke (23) und dem Bremskopf (12) angeordnet ist.

11. Schienenfahrzeugbremsaktuator nach Anspruch 10, bei dem eine mit einem Außengewindemutterabschnitt (26') versehene Gewindestangenmutter (26) mit dem Bremskopf (12) verbunden ist, wobei der Außengewindemutterabschnitt (26') in innerem Gewindeeingriff mit einem drehbaren Einstellrohr (27) steht, das mit der Antriebsbrücke (23) verbunden ist, und das Einstellrohr (27) dazu angeordnet ist, von dem Motor (2) über eine elektromagnetische Kupplung (31), ein Kegelrad (32) und ein Einstellrohrzahnrad (33), das in Vielkeil-Verzahnungsverbindung mit dem Einstellrohr steht, angetrieben zu werden.

12. Schienenfahrzeug, mit einem Schienenfahrzeugbremsaktuator wie in einem der vorhergehenden Ansprüche beansprucht, wobei der Schienenfahrzeugbremsaktuator zum bremsenden in Eingriff bringen eines Bremsklotzes (45) oder Bremsbelags (9) mit einem rotierenden Teil (W; D) des Schienenfahrzeugs eingerichtet ist.

## Revendications

1. Actionneur de frein de véhicule ferroviaire pour mettre en prise, par freinage, un patin (45) ou une plaquette (9) de frein avec une partie rotative (W; D) du véhicule ferroviaire, ledit actionneur de frein de véhicule ferroviaire comprenant des moyens de ressort (24; 42) créant une force de frein linéaire ; dans lequel l'actionneur de frein de véhicule ferroviaire comprend un mécanisme excentrique (21, 23, 25; 41) dans une chaîne de transmission de force de frein des moyens de ressort (24; 42) au patin (45) ou plaquette (9) de frein, et un moteur (2) configuré pour contrôler la position angulaire d'un excentrique (25; 47, 48) dans ledit mécanisme excentrique (21, 23, 25; 41) et ainsi la force de frein transmise à partir des moyens de ressort (24; 42).

2. Actionneur de frein de véhicule ferroviaire selon la revendication 1, pour mettre en prise, par freinage, une plaquette de frein (9) avec un disque de frein (D) du véhicule ferroviaire, ledit actionneur de frein de véhicule ferroviaire comprenant lesdits moyens de ressort (24) pour solliciter un pont d'entraînement (23) dans une direction d'application de frein, le pont d'entraînement (23) étant raccordé à la plaquette de frein (9) et étant contrôlé dans sa position dans cette direction par ledit excentrique, de préférence une came (25) qui s'étend à travers une ouverture dans le pont d'entraînement (23) et est agencé sur un arbre de commande (21) tourillonné par rapport à un logement (4) de l'actionneur de frein de véhicule ferroviaire et raccordé au moteur, de préférence un moteur rotatif électrique (2).

3. Actionneur de frein de véhicule ferroviaire selon la revendication 2, dans lequel lesdits moyens de ressort, de préférence des ressorts de compression (24), sont supportés par un couvercle (5) du boîtier (4) de l'actionneur de frein de véhicule ferroviaire, et dans lequel l'arbre de commande (21) est tourillonné dans es supports d'arbre (22) du couvercle (5).

4. Actionneur de frein de véhicule ferroviaire selon la revendication 2, dans lequel un engrenage de réduction (14-18) est prévu entre le moteur (2) et son pignon d'entraînement de sortie (19).

5. Actionneur de frein de véhicule ferroviaire selon la revendication 4, dans lequel l'engrenage de réduction comprend un engrenage de réduction planétaire (14-18).

6. Actionneur de frein de véhicule ferroviaire selon la revendication 4 ou 5, dans lequel ledit pignon d'entraînement de sortie (19) est en mise en prise d'engrenage avec une roue dentée (20) sur l'arbre de commande (21).

7. Actionneur de frein de véhicule ferroviaire selon l'une quelconque des revendications 2 à 6, dans lequel le pont d'entraînement (23) est en raccordement avec un porte-semelle de frein (12) qui est raccordée à son tour à la plaquette de frein (9).

8. Actionneur de frein de véhicule ferroviaire selon la revendication 7, dans lequel la plaquette de frein (9) est fixée à un support de plaquette de frein (8) qui est raccordé au porte-semelle de frein (12) par un levier de frein (11) fixé, de manière pivotante, à un ensemble de mise en prise de disque de frein (3).

9. Actionneur de frein de véhicule ferroviaire selon la revendication 7, dans lequel une cellule de charge (28-30) est agencée entre le pont d'entraînement (23) et le porte-semelle de frein (12), et de préférence configurée pour détecter la force de freinage transmise au porte-semelle de frein (12).

10. Actionneur de frein de véhicule ferroviaire selon l'une quelconque des revendications 7 à 9, dans lequel un dispositif d'ajustement de jeu (26, 26', 27, 31-34) est agencé entre le pont d'entraînement (23) et le porte-semelle de frein (12).

11. Actionneur de frein de véhicule ferroviaire selon la revendication 10, dans lequel une tige d'écrou (26) prévue avec une partie d'écrou filetée externe (26') est raccordée au porte-semelle de frein (12), la partie d'écrou filetée externe (26') étant en mise en prise par filetage interne avec un tube d'ajustement rotatif (27) raccordé au pont d'entraînement (23), et le tube d'ajustement (27) étant agencé pour être entraîné par le moteur (2) via un embrayage électromagnétique (31), une roue dentée conique (32) et une roue dentée de tube d'ajustement (33) en raccordement par cannelures avec le tube d'ajustement.

12. Véhicule ferroviaire, comprenant un actionneur de frein de véhicule ferroviaire selon l'une quelconque des revendications précédentes, ledit actionneur de frein de véhicule ferroviaire étant configuré pour mettre en prise, par freinage, un patin (45) ou une plaquette (9) de frein avec une partie rotative (W ; D) du véhicule ferroviaire.
